# EUROPEAN PATENT SPECIFICATION

(11) **EP 1 570 748 B1**
(45) Date of publication and mention of the grant of the patent: **24.09.2008**
(21) Application number: 05075517.2
(22) Date of filing: 02.03.2005
(51) Int. Cl.: A23K 1/00, A23K 1/18, A23K 1/16

(54) **Feed pellets based on natural materials and method for the preparation of the same**
Futterpellets auf Basis natürlicher Materialien und Verfahren zur Herstellung derselben
Granulés alimentaires pour animaux à base de matériaux naturels et procédé pour leur préparation

(30) Priority: 04.03.2004 NL 1025632
(43) Date of publication of application: 07.09.2005
(73) Proprietor: Cehave Landbouwbelang Voeders B.V., 5466 SB Veghel (NL)
(72) Inventor: Van Poppel, Frans, 6081 EA Haelen (NL)
(74) Representative: Valkonet, Rutger

(56) References cited:
- EP-A- 0 479 555
- EP-A- 0 812 545
- GB-A- 1 570 521
- US-A- 3 496 858
- US-A- 5 053 235
- US-A- 5 939 124
- US-A- 6 016 742
- GONZALEZ, Z., AND PEREZ, E.: "Evaluation of lentil starches modified by microwave irradiation and extrusion cooking" FOOD RESEARCH INTERNATIONAL., vol. 35, 2002, pages 415-420, XP002304117 GBELSEVIER APPLIED SCIENCE, BARKING.
- FORNAL ET AL: "Chemical characteristics and physico-chemical properties of extruded mixtures of cereal starches" STARCH STARKE, WILEY-VCH VERLAG, WEINHEIM, DE, vol. 39, no. 3, 1987, pages 75-78, XP002099181 ISSN: 0038-9056

## Description

The present invention relates to a method of preparing feed pellets with a base of natural materials, wherein the starting materials are mixed and processed into feed pellets. The invention further relates to a feed product consisting of starting materials with a base of natural materials, which have been processed into feed pellets.

Such a method is already known from European patent application No. 0 498 032, wherein feed pellets are produced by pulverizing a homogeneous mixture of starting materials and subsequently compressing the same, using a roller press comprising two counterrotating rollers for compressing the pulverized mixture into a feed product in the form of pellets. A drawback of such a method is the fact that the feed pellets thus obtained have a high density. Because of this, the feed pellets are less easily digested by the animals that are fed these feed pellets, so that an optimum feed conversion is not obtained. In addition, problems arise in practice as regards the overall condition of animals.

G. Sacchetti et al. in Food Research International 37 (2004), 527-534 relates to snack-like products obtained by extrusion cooking dough with a base of mixtures of chestnut and rice flour to obtain very thin (0.5 mm) hexagonal pellets, which are dried so as to obtain very light puffed snacks.

EP 1 440 622 relates to a coherent mass of bioplastic comprising a molten component, which component comprises an expanded material. The product is used for toys, for example, and dental chewing products for pets.

Z. González in Food Research International 35 (2002), 415-420 relates to extrusion cooking of lentil starches, which procedure reduces the water absorption, the solubility and the swelling capacity of the lentil starches.

EP 0 479 555 relates to a hard, farinaceous, extruded pet food product, comprising at least about 20 % farinaceous component, about 15 wt.% added fat and less than about 15 wt.% water.

L. Fornal in Starch (Stärke), Wiley-VCH, Verlag, Weinheim, DE, part 39, No. 3, 1987, 99. 75-78 relates to extrusion cooking of starches from cereals for human consumption.

GB 1,570,521 relates to a method for extrusion cooking of cereals to obtain a product having a density of about 40-60 g/l.

EP 0 812 545 relates to expanded food products for human and animal consumption that have been prepared by extrusion cooking, which food products contain hydrocolloids.

US 5.053.235 relates to an extruded composition for horses that reduces the feed intake, which composition has low-to-medium energy requirements.

US 6.016.742 relates to a device for extrusion cooking, which device is short in length and which has an enhanced capacity, and which is furthermore capable of producing high-density extrudates.

US 5.939.124 relates to a device for extrusion cooking, which has been especially designed for the production of high-density highly cooked food products in the form of pellets.

The object of the present invention is to provide a feed product that effects an enhanced feed conversion in the animal, so that less feed is needed in order to obtain the same increase in body weight.

In addition to that it is an object of the present invention to provide a feed product which leads to an improved condition of the animals to be fed and to a decreased manure production.

The feed pellet with a base of natural materials, wherein the feed pellet has a density of maximally 550 g/l is characterized in that the swelling capacity at room temperature of the feed pellet is at least 35 ml after 10 minutes, based on an amount of 50 grams of feed pellets.

The present method of preparing feed pellets with a base of natural materials, wherein the starting materials are mixed and processed into feed pellets, is characterized by the following steps:
a) providing a starch-containing composition having a particle size in the 200-650 µm range;
b) contacting the composition of step a) with a specific amount of additional ingredients;
c) extruding the product of step b) so as to obtain feed pellets, having a density of maximally 550 g/l and a swelling capacity at room temperature of at least 35 ml after 10 minutes, based on an amount of 50 grams of feed pellets.

One or more of the above objects are accomplished by carrying out the method according to the present invention.

The average particle size of 200-650 µm mentioned in step a) is in particular desirable in order to obtain a homogeneous mass, which homogeneous mass is required in order to obtain an easy processability during the extrusion step c). If an average particle size of more than 650 µm is used, the obtained mixture will be less homogeneous, which makes it more difficult to carry out step c). On the other hand, if an average particle size of less than 200 µm is used, the risk of clogging during step c) will increase, which is undesirable.

The additional ingredients mentioned in step b) are selected from water, steam, fat, molasses, vinasse, milk products, potato starch and wheat starch, or a combination thereof. The amount of said additional ingredients is selected so that the final feed pellet will have a starch content of at least 25 wt.%, based on the weight of the feed pellet.

Preferably, step c) comprises two successive sub-steps c1) and c2), with the temperature used in sub-step c2) being higher than the temperature used in sub-step c1), in particular a temperature in the 50-100 °C range in sub-step c1) and a temperature in the 110-175 °C range in sub-step c2).

By selecting a temperature of 50-100 °C during sub-step c1), optimum conditions are created for hydrating and pasteurising the product. Said hydrating and pasteurising will not take place, or only to a limited extent, at temperatures below 50 °C, whilst a great loss of nutrients may occur at temperatures above 100 °C combined with a long residence time.

The temperature in the subsequent sub-step c2) is selected between 110 en 175 °C to further pasteurise and cook the product. At a temperature lower than 110 °C the product will not be sufficiently cooked and pasteurised, while a temperature higher than 175 °C may lead to a decrease in the quality of the product.

Steps b) and c) of the method according to the present invention can be carried out in two separate devices or in one device. If step b) and step c) are carried out in one and the same device, this will take place in an extruder, which extruder preferably comprises at least two zones in which different temperatures prevail. Step b) will be carried out in the first zone at a lower temperature, after which the extrusion step c) will be carried out in a second zone at a higher temperature.

The product from step b) preferably has a fat content of 0.5-15 wt.%, in view of the nutritive requirements of the animal to be fed. The nutritive value of the product having a fat content of less than 0.5 wt.% will be insufficient, whilst a product having a fat content of more than 15 wt.% will be less easy to process in step c) and, in addition, less easy to digest by the animals.

The product from step b) preferably has a water content of 10-30 wt.%, in particular 10-20 wt.%, in view of the processability of the product in the subsequent method steps. The processability of a product having a water content of less than 10 wt.% will be insufficient, and the obtained feed pellets will be too dry, whereas a water content of more than 30 wt.% leads to a product that is too wet, resulting in difficulties in step c).

Preferably, the residence time in sub-step c1) is longer than the residence time in sub-step c2), the residence time in sub-step c1) preferably being 1.5 minute, in particular 2 minutes, more in particular 2.5 minutes, and the residence time in sub-step c2) varying between 0.5 and 20 seconds, preferably between 2 and 10 seconds, more in particular between 3 and 5 seconds.

The residence time in sub-step c1) is selected so that an adequate hydration and homogenisation of the mixture of step b) is obtained.

Preferably, a short residence time is selected in sub-step c2) so as to minimise the loss of nutritive value. However, the residence time must be long enough to ensure that the product has been sufficiently cooked and pasteurised.

The feed pellets obtained in step c) are preferably cooled and/or dried before being further processed or stored for consumption.

The feed pellets obtained by using the above method preferably have a density, also called bulk density, of maximally 550 grams per litre, in particular maximally 500 g/l. The density is determined by the analysis method to be described below. The feed pellets that are currently commercially available have higher densities, e.g. 650-800 g/l. Such a high density will result in a less optimal chyme in the stomach of the animal, so that it will take longer before the process of digesting the feed product is started. Since it takes too long before digestion commences, the animal will eat too much, and the feed will thus be insufficiently digested. This may lead to damage to the animal's stomach, retarded growth, a reduced milk production and even to an increased occurrence of stillbirths. Since the present feed pellets have a significantly lower density, the combination with the digestive juices and water in the animal's stomach will lead to an optimum chyme. In this way an improved utilisation of the present feed product is obtained, resulting in an more rapid body weight increase, an enhanced milk production and a higher percentage of animals that are born alive. All this results in an improved utilisation of the feed product, because a smaller amount of feed will suffice. This is advantageous not only from an economic point of view, but also from an environmental point of view, since less manure is produced.

The water-binding capacity of the feed pellets according to the invention is at least 200 % after 10 minutes, in particular 150 % after 5 minutes, based on the weight of the feed pellets. The water-binding capacity is determined by means of the analysis method to be described below. It is in particular important for the feed pellets to bind a large amount of water in the first five minutes. The fact is that a high water-binding capacity causes the feed pellets to disintegrate in the stomach, forming a chyme, whereupon the digestion process of the feed pellets commences. A high water-binding capacity in the first minutes indicates a quick formation of the chyme and consequently to a rapid start of the digestion process, thereby obtaining the aforesaid advantages.

The swelling capacity of the feed pellets according to the present invention is at least 35 ml after 10 minutes, preferably at least 25 ml after 5 minutes, based on an amount of 50 grams of feed pellets. The swelling capacity is determined by means of the analysis method to be described below. It is in particular important that the swelling capacity be high during the first few minutes, since this indicates how quickly the feed pellets will increase in volume in the animal's stomach. A large increase in the volume of the feed pellets in the animal's stomach will lead to the animal feeling satisfied. The higher the swelling capacity during the first minutes, the more quickly the animal will feel satisfied. Since the animal will feel satisfied more quickly, it will consume less feed per unit time.

The sedimentation value of the feed pellets in water after 30 minutes is maximally 25 ml, for example, in particular maximally 10 ml, based on an amount of 50 grams of feed pellets. The sedimentation value is determined by means of the analysis method to be described below. A sedimentation value of maximally 25 ml after 30 minutes indicates that the feed pellets form a stable suspension in water, from which it can be deduced that a stable suspension will be formed in the animal's stomach as well, which suspension will hardly sag, if at all. A stable suspension of the feed pellets indicates that the feed pellets will be optimally digested. An optimum digestion represents a maximum feed intake. The result is an improved overall condition of the animal, a higher weight increase of the animal as well as a decrease of the total amount of feed that is consumed.

The starting materials that are used for the feed pellets according to the present invention are not specifically limited and may be selected from, for example, one or more materials from the group consisting of wheat, oats, barley, rye, tapioca, maize, potato, rice, molasses, vinasse, soybean meal, sunflower seed meal, rape seed meal, animal fats, vegetable oils and minerals.

In addition to that it is possible to add one or more additives selected from the group consisting of enzymes, vitamins, anti-oxidants, colorants, flavourings, carotenoids, synthetic amino acids, organic acids, coccidiostatics, antimicrobial growth stimulants, trace elements and veterinary medicines. The use of said additives depends on the ultimate use of the feed and will be varied for different purposes, such as feed for young animals, older animals, nursing animals, fattening animals and the like.

Preferably, 0.5-15 wt.% of fat, 0.1-5 wt.% of water and 1-10 wt.% of steam are added during step b) in order to obtain an intermediary product having an optimum composition and an optimum temperature for improving the processability in the subsequent steps and also for obtaining the correct final composition.

Preferably, the size of the feed pellets after the extrusion step is maximally 1.2 cm. If larger feed pellets are obtained, these pellets will be difficult to eat for the animals. The feed pellets obtained after extrusion in step c) may have any desired shape, such as square, round, oval and rectangular.

Preferably, an additional step d) is carried out after the aforesaid method steps a) - c), in which step d) the feed pellets obtained in step c) are contacted with one or more components selected from the group consisting of enzymes, vitamins, anti-oxidants, colorants, flavourings, carotenoids, synthetic amino acids, organic acids, coccidiostatics, antimicrobial growth stimulants, trace elements and veterinary medicines.

Preferably, a solution or a suspension of one or more of said ingredients in water is used for contacting the feed pellets with said ingredients. It will be understood, however, that also other solvents or mixtures thereof can be used. There are several methods for carrying out step d), e.g. spraying, dipping, subjecting the feed pellets to a sub-atmospheric pressure or to a high pressure, and the like.

The present invention also relates to a feed pellet with a base of natural materials, characterized in that the feed pellet has a density of maximally 550 g/l. and a swelling capacity as described above.

Further preferred embodiments are defined in the subclaims.

Experimental test data from tests at experimental farms show that pigs react very well to the use of the present feed pellets. Reference is made to the accompanying examples for more details.

It will be apparent to those skilled in the art that the use of the present feed pellets as described in the examples is not limited to pigs alone, but that it also extends to other animals, such as cattle, goats, sheep and horses.

The present invention will now be explained in more detail by means of a number of examples and comparative examples, from which the advantages of the present invention will become apparent.

### Methods of analysis

### Density

The density of the feed pellets, also called bulk density, is determined in accordance with ISO 7971-2. In accordance with said procedure, the feed pellet sample to be tested is homogenised, and a tube having a volume of 1 litre is completely filled with loose bulk material. The difference in weight (grams) between the empty tube and the tube filled with homogenised feed pellets indicates the density in grams per litre.

### Sedimentation value

The sedimentation value of the feed pellets is determined as follows. The feed pellet sample to be tested is homogenised. 50 ± 0.1 grams of the homogenised feed pellets is transferred to a 400 ml beaker, and 200 ± 0.1 grams of water at room temperature is added. The whole is allowed to stand for 30 minutes, after which the whole is stirred with a spatula for 30 seconds. The suspension thus obtained is transferred to a 250 ml measuring cylinder, and after 30 minutes the levels of (the sediment + the supernatant liquid) and of the sediment are read. The difference between the two values (the sediment + the supernatant liquid) - the sediment is the amount of supernatant liquid, referred to as the sedimentation value. The results of the sedimentation test are shown in Tables 1 and 2. The lower the sedimentation value, the more stable the suspension that is formed.

### Swelling capacity

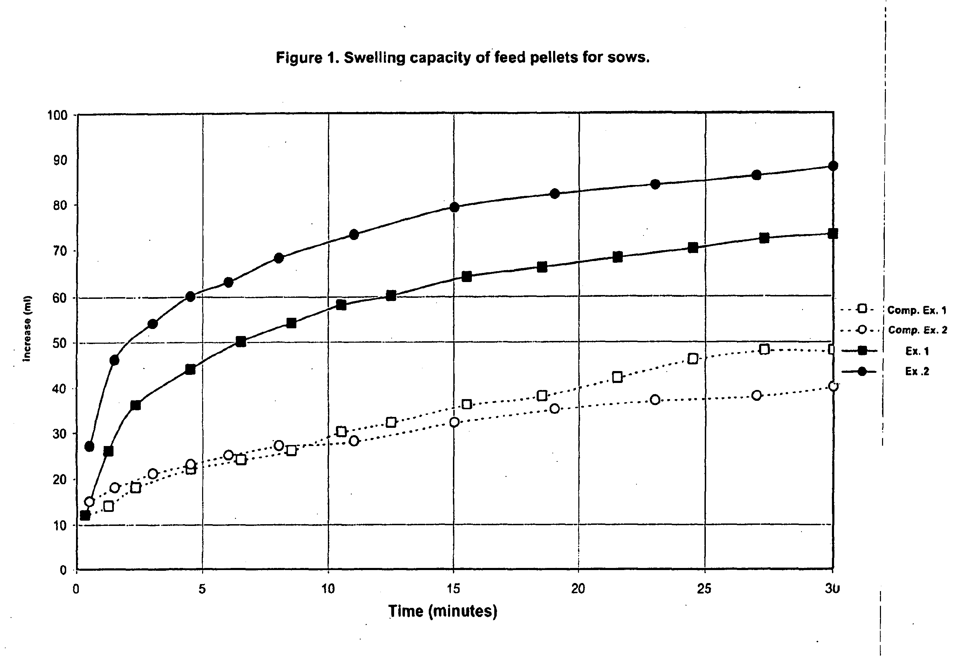

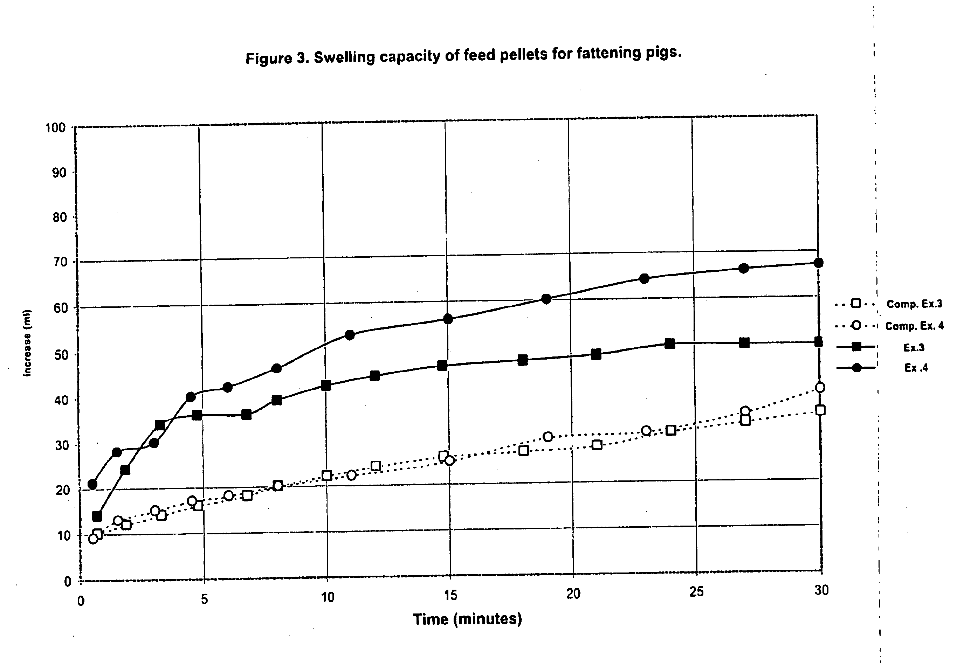

The swelling capacity of the feed pellets in water is determined as follows. The feed pellet sample to be tested is homogenised and 50 ± 0.1 grams thereof is transferred to a 250 ml measuring cylinder. The level of the loose bulk sample of homogenised feed pellets is read and subsequently 200 ± 0.1 grams of water at room temperature is added thereto. The change in the level of the bulk sample was recorded as a function of time for 30 minutes. The results are shown in Figs. 1 and 3 as the increase (in ml) of the level of the sample plotted against the time (in minutes). The greater the level change, the higher the swelling capacity.

### Water-binding capacity

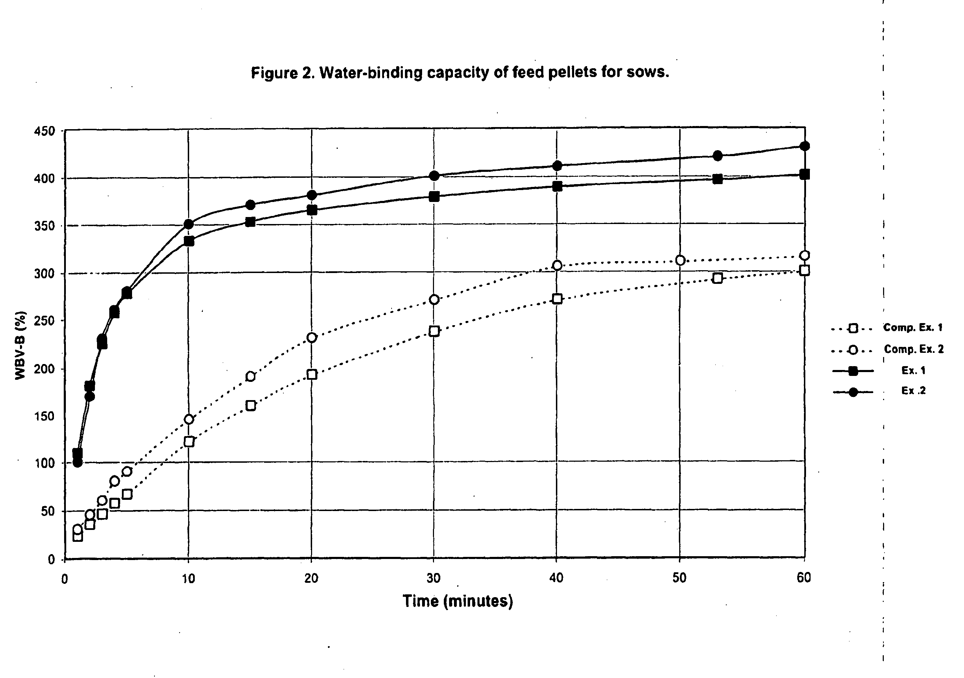

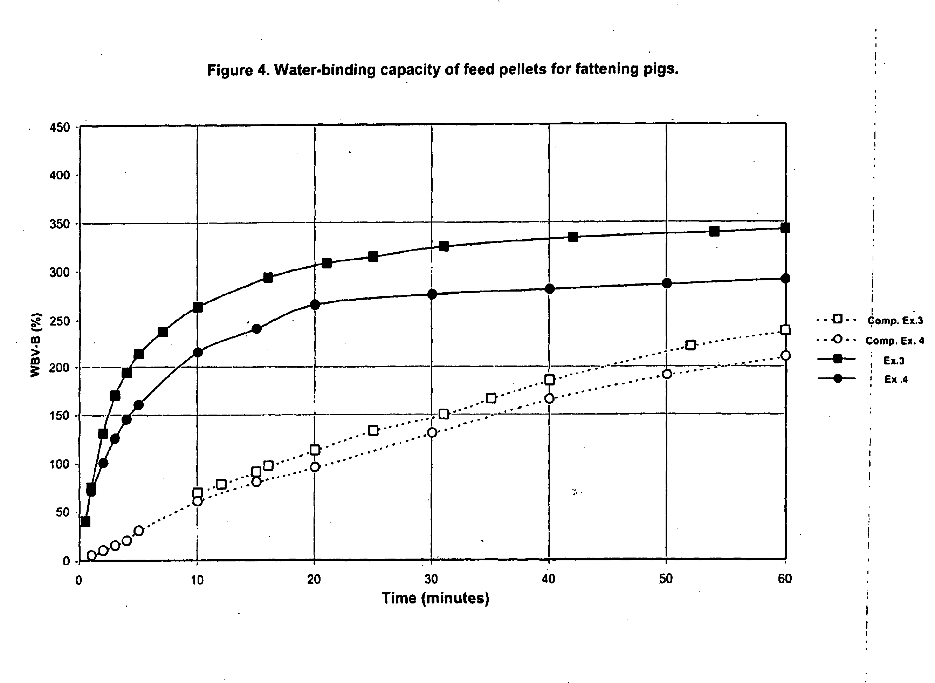

The water-binding capacity of the feed pellets is determined by means of an adapted method according to Baumann (H. Baumann, Apparatur nach Baumann zur Bestimmung der Flussigkeitsaufname von pulvrigen Substanzen, Fette Seifen Anstrichmittel 68, 9, 1966, see TR/Preferably meth. 92-01). 2.5 grams of the feed pellet sample to be tested is weighed and transferred to a PI type glass filter. The amount of water absorbed by the feed pellets as a result of capillary action is gravimetrically determined as a function of time. The difference in height between the upper side of the glass filter and the water level in the reservoir is 1 mm. The weight increase caused by the absorption of water is expressed as a percentage of the sample. The results are shown in Figs. 2 and 4 as the percentage of water-binding capacity according to Baumann (WBV-B) plotted against the time. The higher the water-binding capacity, the more hydrophilic the product.

### Examples

### Example 1. Feed pellets for sows.

In step a), a composition comprising wheat, rye, tapioca, barley as well as sunflower seed meal and soybean meal was provided. The composition thus obtained had a starch content of about 35 wt.%. The obtained composition was subsequently ground into a product having an average particle size of 590 µm, whereupon the ground product was mixed for 2.5 minutes with additional ingredients, viz. 0.5 % fat, 1.5 % water and 9 % steam, based on the weight of the composition obtained in step a), until the temperature of the mixture was 90 °C. The product was then heated under further mixing to a temperature of 120 °C, whereupon extrusion according to step c) yielded feed pellets in the order of 3.5-4 mm. The analysis results are shown in Table 1, Fig. 1 and Fig. 2.

### Example 2. Feed pellets for sows.

A composition corresponding to the composition of Example 1 was provided. Said composition was subjected to the same treatment as in Example 1; the analysis results are shown in Table 1, Fig. 1 and Fig. 2.

### Comparative example 1. Feed pellets for sows.

A composition corresponding to the composition of Example 1 was provided. Said composition was ground into a product having an average particle size of 800 µm, after which the ground product was mixed for 0.5 minutes with 5 % steam, based on the weight of the composition obtained in step a), until the temperature of the mixture was 60 °C. The product was then compressed into feed pellets of 3.5-4 mm in temperature conditions of 75 °C. The analysis results are shown in Table 1, Fig. 1 and Fig. 2.

### Comparative example 2. Feed pellets for sows.

A composition corresponding to the composition of Example 1 was provided. Said composition was subjected to the same treatment as in Comparative Example 1; the analysis results are shown in Table 1, Fig. 1 and Fig. 2.

**Table 1**

| **Example** | **Density (g/l)** | **Sedimentation value (ml)** | **Swelling capacity (ml) after 10 minutes** | **Water-binding capacity (%) after 10 minutes** |
|---|---|---|---|---|
| Example 1 | 531 | 6 | 58 | 335 |
| Example 2 | 497 | 6 | 72 | 350 |
| Comp. Ex. 1 | 699 | 45 | 29 | 148 |
| Comp. Ex. 2 | 677 | 44 | 28 | 125 |

From the above Table 1 it is apparent that the feed pellets obtained by using the method according to the present invention have a density and a sedimentation value that are both significantly lower than those of the feed pellets obtained by using a prior art method. In addition, the present feed pellets have a significantly higher swelling capacity and water-binding capacity, both after 10 minutes. As already said before, a low density is in particular advantageous with a view to obtaining an optimum digestion, feed intake and weight increase. A low sedimentation value, a high swelling capacity and a high water-binding capacity are especially advantageous with a view to obtaining a rapid digestion and a good uptake of nutrients by the animal.

### Example 3. Feed pellets for fattening pigs.

In step a) a composition comprising barley, rye, maize, peas and tapioca was provided. The composition thus obtained had a starch content of about 35 wt.%. Subsequently, the obtained composition was ground into a product having an average particle size of 620 µm, after which the ground product was mixed for 2.5 minutes with additional ingredients, viz. 1 % fat, 1.5 % water and 9 % steam, based on the weight of the composition of step a), until the temperature of the mixture was 90 °C. The product was then heated under further mixing to a temperature of 125 °C, with feed pellets in the order of 3.5-4 mm being obtained in the subsequent extrusion step c). The analysis results are shown in Table 1, Fig. 3 and Fig. 4.

### Example 4. Feed pellets for fattening pigs.

A composition corresponding to the composition of Example 3 was provided. Said composition was subjected to the same treatment as in Example 3; the analysis results are shown in Table 2, Fig. 3 and Fig. 4.

### Comparative example 3. Feed pellets for fattening pigs.

The same composition as in Example 3 was used, which composition was ground into a product having an average particle size of 800 µm, after which the ground product was mixed for 0.5 minutes with 5 % steam, based on the weight of the composition obtained in step a), until the temperature of the mixture was 60 °C. The product was then compressed into feed pellets measuring 3.5-4 mm in temperature conditions of 75 °C. The analysis results are shown in Table 4, Fig. 3 and Fig. 4.

### Comparative example 4. Feed pellets for fattening pigs.

A composition corresponding to the composition of Example 3 was provided. Said composition was subjected to the same treatment as in Comparative Example 3; the analysis results are shown in Table 2, Fig. 3 and Fig. 4.

**Table 2**

| **Example** | **Density (g/l)** | **Sedimentation value (ml)** | **Swelling capacity (ml) after 10 minutes** | **Water-binding capacity (%) after 10 minutes** |
|---|---|---|---|---|
| Example 3 | 557 | 4 | 42 | 268 |
| Example 4 | 511 | 7 | 52 | 220 |
| Comp. Ex. 3 | 730 | 62 | 22 | 73 |
| Comp. Ex. 4 | 687 | 58 | 22 | 68 |

From the above Table 2 it is apparent that the feed pellets obtained by using the method according to the present invention have a density and a sedimentation value that are both significantly lower than those of the feed pellets obtained by using a prior art method. In addition, the present feed pellets have a significantly higher swelling capacity and water-binding capacity, both after 10 minutes. As already said before, a low density is in particular advantageous with a view to obtaining an optimum digestion, feed intake and weight increase. A low sedimentation value, a high swelling capacity and a high water-binding capacity are especially advantageous with a view to obtaining a rapid digestion and a good uptake of nutrients by the animal.

### Example 6. Use of the pellets for feedinq sows.

The feed pellets of Example 1 and Comparative Example 1 were tested on 35 pigs at an experimental farm. The results are shown in Table 3. It will be apparent from Table 3 that the use of the feed pellets according to Example 1 led to a significantly lower number of stillborn piglets, whilst the feed intake increased significantly and furthermore the loss of back fat thickness decreased significantly in comparison with the feed pellets of Comparative Example 1. The feed consumption, calculated from the feed intake by the sows, the starting weight and the end weight of sows and piglets at the time of littering and weaning, respectively, was on average 6 % better for the feed pellets of Example 1 than for the feed pellets of Comparative Example 1.

**Table 3**

| **Parameter** | **Feed pellets according to Example 1** | **Feed pellets according to Comparative Example 1** |
|---|---|---|
| number of piglets/litter | 12.48 | 11.45 |
| number of stillborn piglets/litter | 0.31 (p<0.05) | 0.98 |
| feed intake/sow/day after pigging (kg) | 5.33 (p<0.05) | 4.93 |
| loss of back fat thickness (mm)# | 18.77 (p<0.05) | 28.82 |

| | | |
|---|---|---|
| #loss of back fat thickness from day 3 of lactation until 1 day before weaning | | |

### Example 7. Use of the pellets for feeding fattening pigs.

The feed pellets of Example 3 were tested at an experimental farm; the average results of three tests are shown in Table 4. The starting weight of the animals varied from 21.5 kg to 33 kg, and the end weight varied from 100 kg to 108 kg. It will be apparent from Table 4 that the use of the feed pellets of Example 3 led to a significantly lower feed intake, a significantly better feed conversion and furthermore to a strongly decreased number of deaths in comparison with the feed pellets of Comparative Example 3. Furthermore it was found that the use of the pellets led to a lower manure production and an improved consistency of the manure, resulting in drier and cleaner pens as well as pigs.

**Table 4**

| **Parameter** | **Feed pellets according to Example 3** | **Feed pellets according to Comparative Example 3** |
|---|---|---|
| Feed intake (kg/animal/day) | 2.02 (p<0.05) | 2.10 |
| Growth (g/day) | 813 | 814 |
| Feed conversion# | 2.48 (p<0.05) | 2.58 |
| Number of deaths (%) | 2.81 | 5.42 |

| | | |
|---|---|---|
| # kilogram of feed pellets per kilogram of body weight increase | | |

## Claims

1. A feed pellet with a base of natural materials, wherein the feed pellet has a density of maximally 550 g/l **characterized in that** the swelling capacity at room temperature of the feed pellet is at least 35 ml after 10 minutes, based on an amount of 50 grams of feed pellets.

2. A feed pellet according to claim 1, **characterized in that** the feed pellet has a density of maximally 500 g/l.

3. A feed pellet according to any one of the preceding claims , **characterized in that** the water-binding capacity of the feed pellet is at least 200 % after 10 minutes, based on the weight of the feed pellet. 3

4. A feed pellet according to claim 3, **characterized in that** the water-binding capacity of the feed pellet is at least 150 % after 5 minutes, based on the weight of the feed pellet.

5. A feed pellet according to any one of the preceding claims, **characterized in that** the swelling capacity of the feed pellet is at least 25 ml after 5 minutes, based on an amount of 50 grams of feed pellets.

6. A feed pellet according to any one of the preceding claims , **characterized in that** the sedimentation value of the feed pellet after 30 minutes is maximally 25 ml, based on an amount of 50 grams of feed pellets.

7. A feed pellet according to claim 6, **characterized in that** the sedimentation value of the feed pellet after 30 minutes is maximally 10 ml, based on an amount of 50 grams of feed pellets.

8. A method of preparing feed pellets with a base of natural materials, wherein the starting materials are mixed and processed into feed pellets, wherein the method comprises the following steps:
a) providing a starch-containing composition having a particle size in the 200-650 µm range;
b) contacting the composition of step a) with a specific amount of additional ingredients;
c) extruding the product of step b) so as to obtain feed pellets, having a density of maximally 550 g/l and a swelling capacity of at least 35 ml after 10 minutes, based on an amount of 50 grams of feed pellets.

9. A method according to claim 8, **characterized in that** said additional ingredients are selected from water, steam, fact, molasses, vinasse, milk products, potato starch and wheat starch, or a combination thereof.

10. A method according to any one or more of the claims 8-9, **characterized in that** step c) comprises two successive sub-steps c1) and c2), with the temperature used in sub-step c2) being higher than the temperature used in sub-step c1).

11. A method according to claim 10, **characterized in that** sub-step c1) is carried out at a temperature in the 50-100 °C range.

12. A method according to any one or more of the claims 10-11, **characterized in that** sub-step c1) is carried out at a temperature in the 110-175 °C range

13. A method according to any one or more of the claims 10-12, **characterized in that** the residence time in sub-step c1) is longer than the residence time in sub-step c2).

14. A method according to any one of the claims 8-13, **characterized in that** the feed pellets obtained in step c) have a density of maximally 500 g/l.

15. A method according to any one or more of the claims 8-14, **characterized in that** the water-binding capacity of the feed pellets of step c) is at least 200 % after 10 minutes, based on the weight of the feed pellets.

16. A method according to claim 15, **characterized in that** the water-binding capacity of the feed pellets of step c) is at least 150 % after 5 minutes, based on the weight of the feed pellets.

17. A method according to any one of the claims 8-16, **characterized in that** the pellets obtained in step c) have a swelling capacity at room temperature of at least 25 ml after 5 minutes, based on an amount of 50 grams of feed pellets.

18. A method according to any one or more of the claims 8-17, **characterized in that** the sedimentation value of the feed pellets of step c) after 30 minutes is maximally 25 ml, based on an amount of 50 grams of feed pellets.

19. A method according to claim 18, **characterized in that** the sedimentation value of the feed pellets of step c) after 30 minutes is maximally 10 ml, based on an amount of 50 grams of feed pellets.

20. A method according to any one or more of the claims 8-19, **characterized in that** the composition of step a) comprises one or more starting materials selected from the group consisting of wheat, oats, barley, rye, tapioca, maize, potato, rice, molasses, vinasse, soybean meal, sunflower seed meal, rape seed meal, animal fats, vegetable oils and minerals.

21. A method according to any one or more of the claims 8-20, **characterized in that** one or more additives selected from the group consisting of enzymes, vitamins, anti-oxidants, colorants, flavourings, carotenoids, synthetic amino acids, organic acids, coccidiostatics, antimicrobial growth stimulants, trace elements and veterinary medicines are added to the composition of step a).

22. A method according to any one or more of the claims 8-21, **characterized in that** an additional step d) is carried nut after the aforesaid method steps a) - c), in which step
d) the feed pellets obtained in step c) are contacted with one or more components selected from the group consisting of enzymes, vitamins, anti-oxidants, colorants, flavourings, carotenoids, synthetic amino acids, organic acids, coccidiostatics, antimicrobial growth stimulants, trace elements and veterinary medicines.

## Patentansprüche

1. Ein Futter-Pellet auf der Grundlage von natürlichen Materialien, wobei das Futter-Pellet eine Dichte von maximal 550 g/l aufweist, **dadurch gekennzeichnet, dass** das Quellvermögen des Futter-Pellets bei Raumtemperatur wenigstens 35 ml nach 10 Minuten beträgt, basierend auf einer Menge von 50 g Futter-Pellets.

2. Futter-Pellet nach Anspruch 1, **dadurch gekennzeichnet, dass** das Futter-Pellet eine Dichte von maximal 500 g/l hat.

3. Futter-Pellet nach einem der vorangehenden Ansprüche, **dadurch gekennzeichnet, dass** die Wasserbindekapazität des Futter-Partikels wenigstens 200% nach 10 Minuten beträgt, basierend auf dem Gewicht des Futter-Pellets.

4. Futter-Pellet nach Anspruch 3, **dadurch gekennzeichnet, dass** die Wasserbindekapazität des Futter-Pellets wenigstens 150% nach 5 Minuten beträgt, basierend auf dem Gewicht des Futter-Pellets.

5. Futter-Pellet nach einem der vorangehenden Ansprüche, **dadurch gekennzeichnet, dass** das Quellvermögen des Futter-Pellets wenigstens 25 ml nach 5 Minuten beträgt, basierend auf einer Menge von 50 g an Futter-Pellets.

6. Futter-Pellet nach einem der vorangehenden Ansprüche, **dadurch gekennzeichnet, dass** der Sedimentationswert des Futter-Pellets nach 30 Minuten maximal 25 ml ist, basierend auf einer Menge von 50 g von Futter-Pellets.

7. Futter-Pellet nach Anspruch 6, **dadurch gekennzeichnet, dass** der Sedimentationswert des Futter-Pellets nach 30 Minuten maximal 10 ml ist, basierend auf einer Menge von 50 g an Futter-Pellets.

8. Verfahren zum Herstellen von Futter-Pellets auf der Grundlage von natürlichen Materialien, wobei die Startmaterialien miteinander vermischt werden und in Futter-Pellets weiterverarbeitet werden, wobei das Verfahren die folgenden Schritte umfasst:
a) Bereitstellen einer stärkehaltigen Zusammensetzung, die eine Teilchengröße im Bereich von 200-650 µm aufweist;
b) In-Verbindung-Bringen der Zusammensetzung des Schrittes a) mit einer spezifischen Menge eines zusätzlichen Bestandteils;
c) Extrudieren des Produktes des Schrittes b), um so Futter-Pellets zu erhalten, die eine Dichte von maximal 550 g/l und ein Quellvermögen von wenigstens 35 ml nach 10 Minuten aufweisen, basierend auf einer Menge von 50 g an Futter-Pellets.

9. Verfahren nach Anspruch 8, **dadurch gekennzeichnet, dass** die zusätzlichen Bestandteile aus: Wasser, Dampf, Fett, Melasse, Schlempe, Milchprodukten, Kartoffelstärke und Weizenstärke oder einer Kombination davon ausgewählt sind.

10. Verfahren nach einem oder mehreren der Ansprüche 8 - 9, **dadurch gekennzeichnet, dass** Schritt c) zwei einander nachfolgende Unterschritte c1) und c2) umfasst, wobei die Temperatur, die in dem Unterschritt c2) genutzt wird, höher als die Temperatur ist, die in Unterschritt c1) genutzt wird.

11. Verfahren nach Anspruch 10, **dadurch gekennzeichnet, dass** der Unterschritt c1) bei einer Temperatur im Bereich von 50 - 100 °C ausgeführt wird.

12. Verfahren nach einem oder mehreren der Ansprüche 10 - 11, **dadurch gekennzeichnet, dass** der Unterschritt c1) bei einer Temperatur in dem Bereich von 110 - 175 °C ausgeführt wird.

13. Verfahren nach einem oder mehreren der Ansprüche 10 - 12, **dadurch gekennzeichnet, dass** die Verbleibedauer im Unterschritt c1) länger als die Verbleibedauer in Unterschritt c2) ist.

14. Verfahren nach einem der Ansprüche 8 - 13, **dadurch gekennzeichnet, dass** die Futter-Pellets, die in Schritt c) erhalten werden, eine Dichte von maximal 500 g/l aufweisen.

15. Verfahren nach einem oder mehreren der Ansprüche 8 - 14, **dadurch gekennzeichnet, dass** die Wasserbindekapazität der Futter-Pellets des Schrittes c) wenigstens 200% nach 10 Minuten beträgt, basierend auf dem Gewicht der Futter-Pellets.

16. Verfahren nach Anspruch 15, **dadurch gekennzeichnet, dass** die Wasserbindekapazität der Futter-Pellets von Schritt c) wenigstens 150% nach 5 Minuten beträgt, basierend auf dem Gewicht der Futter-Pellets.

17. Verfahren nach einem der Ansprüche 8 - 16, **dadurch gekennzeichnet, dass** die Pellets, die in Schritt c) erhalten werden eine Schwellkapazität bei Raumtemperatur von wenigstens 25 ml nach 5 Minuten aufweisen, basierend auf einer Menge von 50g an Futter-Pellets.

18. Verfahren nach einem oder mehreren der Ansprüche 8 - 17, **dadurch gekennzeichnet, dass** der Sedimentationswert der Futter-Pellets des Schrittes c) nach 30 Minuten maximal 25 ml beträgt, basierend auf einer Menge von 50 g an Futter-Pellets.

19. Verfahren nach Anspruch 18, **dadurch gekennzeichnet, dass** der Sedimentationswert der Futter-Pellets des Schrittes c) nach 30 Minuten maximal 10 ml beträgt, basierend auf einer Menge von 50 g an Futter-Pellets.

20. Verfahren nach einem oder mehreren der Ansprüche 8 - 19, **dadurch gekennzeichnet**, das die Zusammensetzung des Schrittes a) eine oder mehrere Startmaterialien umfassen, ausgewählt aus der Gruppe bestehend aus Weizen, Hafer, Gerste, Roggen, Tapioka, Mais, Kartoffel, Reis, Melasse, Schlempe, Sojabohnenzubereitung, Sonnenblumensamenzubereitung, Rapssamenzubereitung, tierischen Fetten, Pflanzenölen und Mineralien.

21. Verfahren nach einem oder mehreren der Ansprüche 8 - 20, **dadurch gekennzeichnet, dass** ein oder mehrere Zusätze aus der Gruppe bestehend aus Enzymen, Vitaminen, Antioxidantien, Farbstoffen, Gewürzen, Carotinoiden, synthetischen Aminosäuren, organischen Säuren, Coccidiostatika, antimikrobiotischen Wachstumsstimulantien, Spurenelementen und Veterinärmedikamenten zu der Komposition des Schrittes a) hinzugefügt sind.

22. Verfahren nach einem oder mehreren der Ansprüche 8 - 21, **dadurch gekennzeichnet, dass** ein zusätzlicher Schritt d) nach den vorangegangenen Verfahrensschritten a) - c) ausgeführt wird, wobei der Schritt d) die Futter-Pellets, die in dem Schritt c) erhalten werden, mit einem oder mehreren Komponenten ausgewählt aus der Gruppe bestehend aus Enzymen, Vitaminen, Antioxidantien, Farbstoffen, Gewürzen, Carotinoiden, synthetischen Aminosäuren, organischen Säuren, Coccidiostatika, antimikrobiotischen Wachstumsstimulantien, Spurenelementen und Veterinärmedikamenten in Kontakt bringt.

## Revendications

1. Granulé alimentaire à base de matières naturelles, dans lequel le granulé alimentaire a une densité au maximum de 550 g/l, **caractérisé en ce que** la capacité de gonflement du granulé alimentaire, à température ambiante, est d'au moins 35 ml après 10 minutes, sur la base d'une quantité de 50 grammes de granulés alimentaires.

2. Granulé alimentaire selon la revendication 1, **caractérisé en ce que** le granulé alimentaire a une densité de 500 g/l au maximum.

3. Granulé alimentaire selon l'une quelconque des revendications précédentes, **caractérisé en ce que** la capacité de fixation à l'eau du granulé alimentaire est d'au moins 200 % après 10 minutes, sur la base du poids du granulé alimentaire.

4. Granulé alimentaire selon la revendication 3, **caractérisé en ce que** la capacité de fixation à l'eau du granulé alimentaire est d'au moins 150 % après 5 minutes, sur la base du poids du granulé alimentaire.

5. Granulé alimentaire selon l'une quelconque des revendications précédentes, **caractérisé en ce que** la capacité de gonflement du granulé alimentaire est d'au moins 25 ml après 5 minutes, sur la base d'une quantité de 50 grammes de granulés alimentaires.

6. Granulé alimentaire selon l'une quelconque des revendications précédentes, **caractérisé en ce que** la valeur de sédimentation du granulé alimentaire après 30 minutes est de 25 ml au maximum, sur la base d'une quantité de 50 grammes de granulés alimentaires.

7. Granulé alimentaire selon la revendication 6, **caractérisé en ce que** la valeur de sédimentation du granulé alimentaire après 30 minutes est de 10 ml, au maximum, sur la base d'une quantité de 50 grammes de granulés alimentaires.

8. Procédé de préparation de granulés alimentaires avec une base de matières naturelles, dans lequel les matières de départ sont mélangées et façonnées en granulés alimentaires, dans lequel le procédé comprend les étapes suivantes :
a) fournir une composition contenant de l'amidon ayant une dimension de particules se situant dans la plage de 200 à 650 µm ;
b) mettre en contact la composition de l'étape a) avec une quantité spécifique de substances supplémentaires ;
c) extruder le produit de l'étape b) de façon à obtenir des granulés alimentaires ayant une densité de 550 g/l au maximum et une capacité de gonflement d'au moins 35 ml après 10 minutes, sur la base d'une quantité de 50 grammes de granulés alimentaires.

9. Procédé selon la revendication 8, **caractérisé en ce que** lesdites substances supplémentaires sont sélectionnées à partir de l'eau, de la vapeur, de produits manufacturés, de mélasses, de vinasses, de produits laitiers, d'amidon de pomme de terre et d'amidon de blé, ou d'une de leurs combinaisons.

10. Procédé selon l'une quelconque, ou davantage, des revendications 8 - 9, **caractérisé en ce que** l'étape c) comporte deux sous-étapes successives c1) et c2), la température utilisée dans la sous-étape c2) étant plus élevée que la température utilisée dans la sous-étape c1).

11. Procédé selon la revendication 10, **caractérisé en ce que** la sous-étape c1) est réalisée à une température se situant dans la plage de 50 à 100° C.

12. Procédé selon l'une quelconque, ou davantage, des revendication 10 - 11, **caractérisé en ce que** la sous-étape c1) est réalisée à une température se situant dans la plage de 110 à 175° C.

13. Procédé selon l'une quelconque, ou davantage, des revendications 10 à 12, **caractérisé en ce que** le temps de séjour dans la sous-étape c1) est plus long que le temps de séjour dans la sous-étape c2).

14. Procédé selon l'une quelconque des revendications 8 à 13, **caractérisé en ce que** les granulés alimentaires obtenus dans l'étape c) ont une densité de 500 g/l au maximum.

15. Procédé selon l'une quelconque, ou davantage, des revendications 8 à 14, **caractérisé en ce que** la capacité de fixation à l'eau des granulés alimentaires de l'étape c) est d'au moins 200 % après 10 minutes, sur la base du poids des granulés alimentaires.

16. Procédé selon la revendication 15, **caractérisé en ce que** la capacité de fixation à l'eau des granulés alimentaires de l'étape c) est d'au moins 150 % après 5 minutes, sur la base du poids des granulés alimentaires.

17. Procédé selon l'une quelconque des revendications 8 à 16, **caractérisé en ce que** les granulés obtenus dans l'étape c) ont une capacité de gonflement à température ambiante d'au moins 25 ml après 5 minutes, sur la base d'une quantité de 50 grammes de granulés alimentaires.

18. Procédé selon l'une quelconque, ou davantage, des revendications 8 à 17, **caractérisé en ce que** la valeur de sédimentation des granulés alimentaires de l'étape c) après 30 minutes est de 25 ml au maximum, sur la base d'une quantité de 50 grammes de granulés alimentaires.

19. Procédé selon la revendication 18, **caractérisé en ce que** la valeur de sédimentation des granulés alimentaires de l'étape c) après 30 minutes est de 10 ml au maximum sur la base d'une quantité de 50 grammes de granulés alimentaires.

20. Procédé selon l'une quelconque, ou davantage, des revendications 8 à 19, **caractérisé en ce que** la composition de l'étape a) comprend une ou plusieurs matières de départ sélectionnées à partir du groupe constitué de blé, d'avoine, d'orge, de seigle, de tapioca, de maïs, de pomme de terre, de riz, de mélasse, de vinasse, de farine de soja, de farine de graines de tournesol, de farine de graines de colza, de graisses animales, d'huiles végétales et de minéraux.

21. Procédé selon l'une quelconque, ou davantage, des revendications 8 à 20, **caractérisé en ce que** un ou plusieurs additifs sélectionnés dans le groupe constitué d'enzymes, de vitamines, d'anti-oxydants, de colorants, de produits aromatiques, de caroténoïdes, d'acides aminés de synthèse, d'acides organiques, de coccidiostatiques, de stimulants de croissance antimicrobienne, d'éléments en traces et de produits de médecine vétérinaire sont ajoutés à la composition de l'étape a).

22. Procédé selon l'une quelconque, ou davantage, des revendications 8 à 21, **caractérisé en ce qu'**une étape supplémentaire d) est effectuée après les étapes a) à c) susdites du procédé,
étape d) dans laquelle les granulés alimentaires obtenus dans l'étape c) sont mis en contact avec un ou plusieurs composant(s) sélectionné(s) dans le groupe constitué d'enzymes, de vitamines, d'anti-oxydants, de colorants, de produits aromatiques, de caroténoïdes, d'acides aminés de synthèse, d'acides organiques, de coccidiostatiques, de stimulants de croissance antimicrobienne, d'éléments en traces et de produits de médecine vétérinaire.
